# EUROPÄISCHE PATENTSCHRIFT

(11) **EP 1 852 583 B1**
(45) Veröffentlichungstag und Bekanntmachung des Hinweises auf die Patenterteilung: **09.07.2008**
(21) Anmeldenummer: 07007279.8
(22) Anmeldetag: 07.04.2007
(51) Int. Cl.: F01N 3/08, F01N 3/20, B01D 53/94

(54) **Abgasanlage einer Brennkraftmaschine mit mehreren Katalysatoren im Abgasstrang**
Exhaust assembly of a combustion engine with several catalytic converters in the exhaust tract
Installation de gaz d'un moteur à combustion interne doté de plusieurs catalyseurs dans le système d'échappement

(30) Priorität: 05.05.2006 AT 7732006
(43) Veröffentlichungstag der Anmeldung: 07.11.2007
(73) Patentinhaber: MAN Nutzfahrzeuge Österreich AG, 4400 Steyr (AT)
(72) Erfinder: Baumgartner, Thomas, 4501 Neuhofen (AT)

(56) Entgegenhaltungen:
- EP-A1- 0 460 507
- DE-A1- 10 123 359
- DE-A1- 10 218 255
- DE-A1- 10 322 963
- GB-A- 2 389 918

## Beschreibung

Die Erfindung betrifft eine Abgasanlage einer Brennkraftmaschine mit Merkmalen der im Oberbegriff des Anspruchs 1 angegebenen Art.

Die Erfindung geht aus von der DE 103 22 963 A1. Aus den dortigen Figuren 2A und 2C ist eine Abgasanlage einer mehrzylindrigen Brennkraftmaschine mit den gattungsgemäßen Merkmalen bekannt. Es ist aber in dieser Schrift nichts über die Art der Katalysatoren in den einzelnen Abgasteilströmen ausgesagt. Andererseits ist es aus der DE 101 23 359 A1, dort Fig. 21 mit zugehörigem Text bekannt, in einem Abgasstrang einen Vorschalldämpfer vorzusehen, in dem ein Hydrolysekatalysator und wenigstens ein Oxidationskatalysator parallel nebeneinander eingebaut sind. In den Eintrittsbereich des Hydrolysekatalysators wird ein Reduktionsmittel eingedüst, aus dem Ammoniak gewonnen wird. Der Oxidationskatalysator dient zur Umwandlung von NO in NO₂. Diese Nebeneinanderanordnung beider Katalysatoren im Vorschalldämpfer kann zu einer unerwünscht ungleichen Durchströmung derselben führen, was entweder eine zu hohe NO₂-Produktion oder eine nicht vollständige Umwandlung des Reduktionsmittels und in Folge dessen schädliche Spaltprodukte wie Isocyansäure bzw. Cyanursäure-Festpartikel bewirken kann.

Es ist daher Aufgabe der Erfindung, in einer Abgasanlage einer Brennkraftmaschine der gattungsgemäßen Art eine Abgasnachbehandlungsvorrichtung vorzusehen, bei der aufgrund der Auswahl und Anordnung der Katalysatoren jene Probleme, wie sie bei der Parallelanordnung der Katalysatoren im Vorschalldämpfer der DE 10123359 A1 auftreten können, eliminiert sind.

Diese Aufgabe wird erfindungsgemäß durch eine Abgasanlage mit den im Anspruch 1 angegebenen kennzeichnenden Merkmale gelöst.

Vorteilhafte Ausgestaltungen und Weiterbildungen der erfindungsgemäßen Lösung sind in den Unteransprüchen angegeben.

Aufgrund der erfindungsgemäßen Anordnung des Oxidationskatalysators ringförmig um den Hydrolysekatalysator in einem gemeinsamen Gehäuse und in seinem zugehörigen Abgasteilstrang ist jeder dieser beiden Katalysatoren immer mit einem definierten Abgasstrom beaufschlagt. Die Funktionalitäten der beiden Katalysatoren werden somit aufgrund ihrer getrennten Anordnung und Anströmung nicht gegenseitig beeinflusst, sondern können sich voll entfalten. Das heißt, über den Oxidationskatalysator strömt ein definierter Abgasstrom, in dem das NO in definierter Menge zu NO₂ umgewandelt wird. Dem Hydrolysekatalysator ist eine definierte, durch den vorgeschaltenen rohrförmigen Abschnitt des betreffenden Abgasteilstrangs gebildete Eindüsstrecke für das Reduktionsmittel zugeordnet, das darin vollständig verdampft werden kann. Nach den Katalysatoren werden die beiden dann unterschiedlichen Gasströme noch im Gehäuse zusammengeführt, dann im weiteren Abgashauptstrang in einer hinreichend langen Mischstrecke innig vermischt und anschließend durch den bzw. die SCR-Katalysatoren sowie gegebenenfalls weitere Katalysatoren geleitet. Mit besonderem Vorteil ist durch die Anordnung des rohrförmigen Abschnitts jenes Abteilstrangs, der den Hydrolysekatalysator beinhaltet, innen im rohrförmigen Abschnitt des anderen Abgasteilstrangs auch ein ringförmiger Heizraum geschaffen, von dem her der innere Rohr-Abschnitt beheizbar bzw. warm haltbar ist, was die Verdampfung des Reduktionsmittels begünstigt. Weitere Vorteile ergeben sich auch aus der Figurenbeschreibung.

Nachfolgend ist die erfindungsgemäße Lösung anhand zweier in der Zeichnung dargestellter Ausführungsbeispiele noch näher erläutert. In der Zeichnung zeigen:
- Fig. 1: schematisch als mehrzylindrige Brennkraftmaschine einen 6-Zylinder-Reihenmotor mit einer Ausführungsform der Erfindung, und
- Fig. 2: schematisch als mehrzylindrige Brennkraftmaschine einen 8-Zylinder-V-Motor mit einer Ausführungsform der Erfindung.

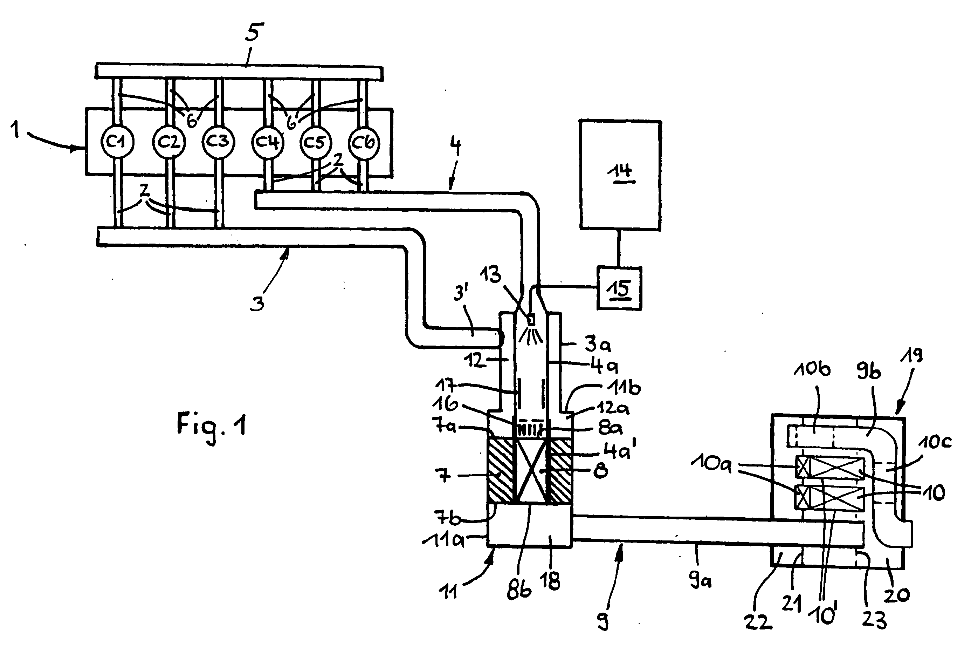

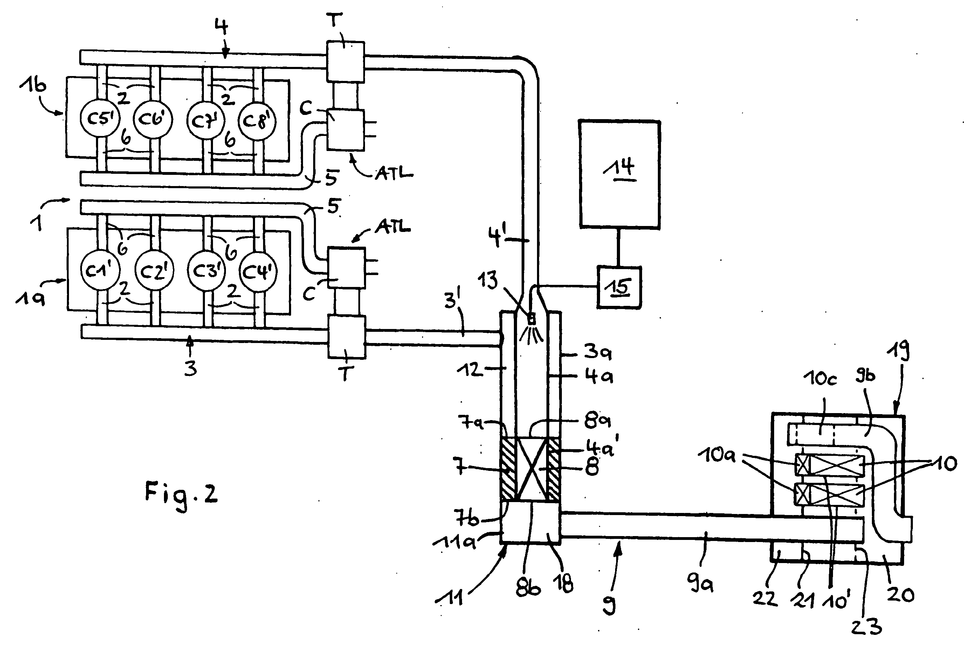

In den Figuren ist mit 1 eine Brennkraftmaschine bezeichnet, die beispielsweise als Antriebsquelle eines Fahrzeugs oder einer stationären Kraftanlage dient. In Fig. 1 ist diese Brennkraftmaschine 1 ein 6-Zylinder-Reihenmotor, dessen Zylinder mit C1, C2, C3, C4, C5, C6 bezeichnet sind. In Fig. 2 ist die Brennkraftmaschine 1 durch einen 8-Zylinder-V-Motor gebildet, dessen Zylinder mit C1', C2', C3', C4', C5', C6', C7', C8' und dessen beide Zylinderreihen mit 1 a, 1 b bezeichnet sind. Die Abgasauslässe der Zylinder sind mit 2 bezeichnet.

Bei jeder Brennkraftmaschine 1 sind die Abgasauslässe 2 eines Teils der Zylinder (C1, C2, C3 in Fig. 1; C1', C2', C3', C4' in Fig. 2) an einem ersten Abgasteilstrang 3 und die Abgasauslässe 2 der restlichen Zylinder (C4, C5, C6 in Fig. 1; C5', C6', C7', C8' in Fig. 2) an einem zweiten Abgasteilstrang 4 angeschlossen. Mit 5 ist eine Ladeluftleitung bezeichnet, aus der die Zylinder der Brennkraftmaschine über Einlässe 6 mit Ansaugluft bzw. Ladeluft versorgbar sind. In jedem der beiden Abgasteilstränge 3, 4 ist ein Katalysator 7 bzw. 8 angeordnet. Strömungsmäßig nach diesen Katalysatoren 7, 8 sind die beiden Abgasteilstränge 3, 4 zu einem dann gemeinsamen Abgashauptstrang 9 vereinigt, in dem wenigstens ein weiterer Katalysator 10 angeordnet ist.

Bei dem V-Motor gemäß Fig. 2 führt jeder der Abgasteilstränge 3, 4 strömungsmäßig vor dem jeweiligen Katalysator 7, 8 über die Turbine T eines Abgasturboladers ATL, durch dessen Verdichter C die Ladeluftleitung 5 mit Ladeluft versorgbar ist.

Erfindungsgemäß ist der im einen Abgasteilstrang 3 angeordnete Katalysator 7 durch einen Oxidationskatalysator gebildet, mit dem das im durchströmenden Abgas enthaltene Stickstoffmonoxid (NO) in Stickstoffdioxid (NO₂) unwandelbar ist. Des Weiteren ist der im anderen Abgasteilstrang 4 angeordnete Katalysator 8 durch einen Hydrolysekatalysator gebildet. Ferner ist der Hydrolysekatalysator 8 zusammen mit dem Oxidationskatalysator 7 in ein gemeinsames Gehäuse 11 eingebaut. Dabei umgibt der Oxidationskatalysator 7 den zylindrischen Hydrolysekatalysator 8 ringförmig. Der Abgasteilstrang 4 weist einen rohrförmigen Abschnitt 4a auf, der in das Gehäuse 11 hineingeführt ist und in seinem Endbereich 4a' den Hydrolysekatalysator 8 aufnimmt. Der Abgasteilstrang 3 weist einen rohrförmigen Abschnitt 3a auf, der den rohrförmigen Abschnitt 4a des anderen Abgasteilstrangs 4 außen mit Abstand umgreift. Dadurch ist im Abgasteilstrang 3 ein ringförmiger Zuströmraum 12 für das zum Oxidationskatalysator 7 hin zu führende Abgas gegeben. Gleichzeitig bildet dieser Zuströmraum 12 auch eine Heizkammer, von der aus Abgaswärme an den inneren Abschnitt 4a des anderen Abgasteilstrangs 4 zu dessen Aufheizung bzw. Warmhaltung übertragbar ist.

In den rohrförmigen Abschnitt 4a des Abgasteilstrangs 4 wird mittels einer Düse 13 strömungsmäßig vor und relativ weit von dem Hydrolysekatalysator 8 entfernt ein Reduktionsmittel eingedüst, aus dem mittels des Hydrolysekatalysators 8 Ammoniak erzeugbar ist. Die Düse 13 bekommt von einem Vorratsbehälter 14 her über eine Dosiereinrichtung 15 das Reduktionsmittel in erforderlicher Menge zugeführt.

Nachfolgend ist auf verschiedene Einzelheiten und Details sowie Ausführungsmöglichkeiten und Ergänzungen der erfindungsgemäßen Abgasanlage näher eingegangen.

Der Hydrolysekatalysator 8 ist vorzugsweise kreiszylindrisch und der diesen umgebende Oxidationskatalysator 7 ist vorzugsweise kreisringzylindrisch ausgebildet, in welchem Fall beide Katalysatoren 7, 8 koaxial zueinander angeordnet und parallel von zwei unterschiedlichen Gasströmen durchströmbar sind.

Der Oxidationskatalysator 7 ist in der hülsenförmigen Außenwand 11a des Gehäuses 11 aufgenommen. Dabei kann die Gehäuse-Außenwand 11a gleichzeitig die Außenwand des Oxidationskatalysators 7 bilden. Alternativ hierzu kann der Oxidationskatalysator 7 eine eigene Außenwand haben, mit der er in die Gehäuse-Außenwand 11a eingepasst ist.

Der rohrförmige Abschnitt 3a des ersten Abgasteilstrangs 3 kann - wie Fig. 2 zeigt - den gleichen Durchmesser haben wie die Außenwand 11a des Gehäuses 11. Der rohrförmige Abschnitt 3a und die Gehäuse-Außenwand 11a können beispielsweise durch ein gemeinsames Rohr oder durch zwei miteinander verbundene Teilrohre gebildet sein. Alternativ hierzu kann der rohrförmige Abschnitt 3a - wie Fig. 1 zeigt - aber auch einen kleineren Durchmesser haben als die Außenwand 11a des Gehäuses 11 und es kann im Gehäuse 11 im Bereich vor der ringförmigen Eintrittsfläche 7a des Oxidationskatalysators 7 ein ringförmiger Einströmraum 12a um den rohrförmigen Abschnitt 4a, 4a' des Abgasteilstrangs 4 ausgebildet sein, welcher Einströmraum 12a mit dem Zuströmraum 12 kommuniziert und durch einen Gehäuse-Wandabschnitt 11b zum Abschnitt 3a hin abgegrenzt ist.

Der rohrförmige Abschnitt 4a des Abgasteilstangs 4 ist vorzugsweise koaxial im rohrförmigen Abschnitt 3a des Abgasteilstrangs 3 angeordnet und hat vorzugsweise einen Durchmesser, der dem ca. 0,5- bis 0,7-fachen des Durchmessers der zylindrischen Außenwand 11a des Gehäuses 11 entspricht. Der rohrförmige Abschnitt 4a des Abgasteilstrangs 4 kann - wie Fig. 2 zeigt - durch ein einstückiges gerades Rohrstück gebildet sein, in dessen Endbereich der Hydrolysekatalysator 8 eingebaut ist. Alternativ hierzu kann der rohrförmige Abschnitt 4a - wie Fig. 1 zeigt - auch durch zwei ineinander gesteckt miteinander verbundene Rohrstücke 4a, 4a' gebildet sein, wobei in das Rohrstück 4a' der Hydrolysekatalysator 8 eingebaut ist. Das Rohrstück 4a bzw. 4a' kann dabei gleichzeitig sowohl die Gehäuseaußenwand des Hydrolysekatalysators 7 als auch die Gehäuseinnenwand für den ringförmigen Oxidationskatalysator 7 bilden oder als Träger für letzteren dienen.

Dem Hydrolysekatalysator 8 kann dann, wenn es sich bei dem Reduktionsmittel um eine Harnstoffwasserlösung handelt, ein Strömungsmischer 16 und gegebenenfalls zusätzlich ein Verdampfer bzw. eine Heizvorrichtung 17 vorgeschaltet sein. Diese Optionen sind in Fig. 1 dargestellt. Der Strömungsmischer 16 ist in den rohrförmigen Abschnitt 4a des Abgasteilstrangs 4 oder eingangs von dessen Teilstück 4a' eingebaut und dient zur innigen Vermischung des mittels der Düse 13 eingedüsten Reduktionsmittels mit dem Abgas sowie zur Vergleichmäßigung der Verteilung dieses Gasgemisches über den ganzen Eintrittsquerschnitt 8a des Hydrolysekatalysators 8. Der zusätzliche Verdampfer bzw. die zusätzliche Heizvorrichtung 17 wäre im rohrförmigen Abschnitt 4a des Abgasteilstranges 4, dort im Bereich zwischen der Eindüsstelle für das Reduktionsmittel sowie dem Strömungsmischer 16 angeordnet und dient zur Beschleunigung der Reduktionsmittelverdampfung oder im Falle einer zu niedrigen Abgastemperatur zur Anhebung derselben im Abschnitt 4a des Abgasteilstrangs 4.

Im Abgasteilstrang 3 mündet dessen Abschnitt 3' entweder schräg oder senkrecht stehend zur Längsachse des rohrförmigen Abschnitts 3a in diesen seitlich ein. Im anderen Abgasteilstrang 4 mündet dessen Abschnitt 4' koaxial in den rohrförmigen Abschnitt 4a ein.

Im Gehäuse 11 ist im Anschluss an die Austrittsquerschnitte 7b des Oxidationskatalysators 7 bzw. 8b des Hydrolysekatalysators 8 ein gemeinsamer Abströmraum 18 ausgebildet, der Teil des gemeinsamen Abgashauptstranges 9 ist und zusammen mit einem folgenden rohrförmigen Abschnitt 9a des letzteren eine hinreichend lange Mischstrecke für die beiden aus den Abgasteilsträngen 3, 4 ausgetretenen und dann vereinigten Gasströme bildet.

Das Gehäuse 11 kann entweder nur als Aufnahmeorgan für die Katalysatoren 7, 8 dienen oder aber zusätzlich auch als (Vor-)Schalldämpfer ausgebildet sein.

Bei dem wenigstens einen weiteren Katalysator 10 im Abgasstrang 9 handelt es sich um einen oder mehrere SCR-Katalysator(en) und gegebenenfalls Ammoniak (NH₃)-Sperrkatalysatoren 10a, Partikeloxidationskatalysator(en) 10b, sowie Stickoxid(NO₂)-Sperrkatalysator(en) 10c.

Im Beispiel von Fig. 1 sind alle diese genannten Katalysatoren 10, 10a, 10b, 10c vorgesehen und nacheinander durchströmt. Im Fall von Fig. 2 sind nur die Katalysatoren 10, 10a und 10c vorgesehen. In beiden Beispielen ist im Abgashauptstrang 9 ein (Haupt-)Schalldämpfer 19 vorgesehen, in den die Katalysatoren 10, 10a, 10b bzw. 10c eingebaut sind. In den Innenraum des Schalldämpfers 19 ist der Abgashauptstrang 9 mit einem Rohrstück 9a hinein verlängert und mündet dort in einem hinten gegebenen Einströmraum 20 aus. Dieser ist durch eine gasundurchlässige Wand 21 von einem vorderen Abströmraum 22 getrennt. Von dieser Wand 21 und einer gasdurchlässigen Haltewand 23 sind mehrere Katalysatormodule 10' lagefixiert gehalten, in denen jeweils zumindest ein SCR-Katalysator 10 und Ammoniaksperrkatalysator 10a zusammengefasst sind. Beide Katalysatormodule 10' sind parallel zueinander von dem zugeführten Abgas-Ammoniak-Gemisch durchströmbar. Vom Abströmraum 22 führt ein Endrohr 9b aus dem Schalldämpfer 19 heraus. In das Endrohr 9b gemäß Fig. 1 sind ein Partikeloxidationskatalysator 10b und nachfolgend ein Stickoxidsperrkatalysator 10c eingebaut. Im Fall von Fig. 2 fehlt der Partikeloxidationskatalysator 10b, ansonsten entspricht die Anordnung jener von Fig. 1. Der in den Fig. 1 und 2 dargestellte Schalldämpfer 19 kommt mit seinen Katalysatoren z. B. in Lastkraftwagen oder Omnibussen zur Anwendung, wo eine besonders kompakte Anordnung zwingend erforderlich ist. In Fällen, bei denen der notwendige Platz in ausreichendem Maß vorhanden ist, z. B. stationären Kraftanlagen wie Cogeneration Plants oder Emergency Sets, können die Katalysatoren 10, 10a, 10b, 10c auch in Reihe hintereinander im Abgashauptstrang 9 eingebaut sein.

## Patentansprüche

1. Abgasanlage einer Brennkraftmaschine, insbesondere eines Nutzfahrzeugs, bei der die Abgasauslässe (2) eines Teils der Zylinder an einem ersten Abgasteilstrang (3) und die Abgasauslässe (2) des anderen Teils der Zylinder mit einem zweiten Abgasteilstrang (4) kommunizieren, wobei in jedem Abgasteilstrang (3, 4) ein Katalysator (7, 8) angeordnet ist und beide Abgasteilstränge (3, 4) strömungsmäßig nach den Katalysatoren (7, 8) in einen gemeinsamen Abgashauptstrang (9) einmünden, in dem wenigstens ein weiterer Katalysator (10, 10a, 10b, 10c) angeordnet ist, **dadurch gekennzeichnet, dass** der im ersten Abgasteilstrang (3) angeordnete Katalysator (7) ein Oxidationskatalysator ist, mit dem das im durchströmenden Abgas enthaltene Stickstoffmonoxid (NO) zu Stickstoffdioxid (NO₂) umwandelbar ist, dass der im zweiten Abgasteilstrang (4) angeordnete Katalysator (8) ein Hydrolysekatalysator ist, dass der Hydrolysekatalysator (8) zusammen mit dem ihn ringförmig umgebenden Oxidationskatalysator (7) in ein gemeinsames Gehäuse (11) eingebaut ist, dass der zweite Abgasteilstrang (4) mit einem rohrförmigen Abschnitt (4a) in das Gehäuse (11) hinein geführt ist und in seinem dortigen Endbereich (4a') den Hydrolysekatalysator (8) aufnimmt, dass der erste Abgasteilstrang (3) mit einem rohrförmigen Abschnitt (3a) den rohrförmigen Abschnitt (4a) des zweiten Abgasteilstranges (4) außen mit Abstand umgreift, wodurch ein ringförmiger, gleichzeitig als Heizkammer dienender Zuströmraum (12) für den Oxidationskatalysator (7) gebildet ist, und dass in den rohrförmigen Abschnitt (4a) des zweiten Abgasteilstranges (4) strömungsmäßig vor dem Hydrolysekatalysator (8) mittelbar einer Düse (13) ein Reduktionsmittel eindüsbar ist, aus dem mittels des Hydrolysekatalysators (8) Ammoniak erzeugbar ist.

2. Abgasanlage nach Anspruch 1, **dadurch gekennzeichnet, dass** der Hydrolysekatalysator (8) kreiszylindrisch und der diesen umgebende Oxidationskatalysator (7) kreisringzylindrisch ausgebildet ist, beide Katalysatoren (7, 8) mithin koaxial zueinander angeordnet und parallel von zwei unterschiedlichen Gasströmen durchströmbar sind.

3. Abgasanlage nach Anspruch 1, **dadurch gekennzeichnet, dass** der Oxidationskatalysator (7) eine eigene Außenwand aufweist, mit der er in die hülsenförmige Gehäuse-Außenwand (11a) eingepasst ist.

4. Abgasanlage nach Anspruch 1, **dadurch gekennzeichnet, dass** die hülsenförmige Gehäuse-Außenwand (11a) gleichzeitig die Außenwand des darin aufgenommenen Oxidationskatalysators (7) bildet.

5. Abgasanlage nach Anspruch 1, **dadurch gekennzeichnet, dass** im Gehäuse (11) im Bereich vor der ringförmigen Eintrittsfläche (7a) des Oxidationskatalysators (7) ein ringförmiger Einströmraum (12a) um den rohrförmigen Abschnitt (4a) des zweiten Abgasteilstranges (4) ausgebildet ist, der mit dem Zuströmraum (12) kommuniziert.

6. Abgasanlage nach Anspruch 1, **dadurch gekennzeichnet, dass** im Gehäuse (11) im Anschluss an die Austrittsquerschnitte (7b, 8b) des Oxidationskatalysators (7) und Hydrolysekatalysators (8) ein gemeinsamer Abströmraum (18) vorhanden ist, der einen Teil des gemeinsamen Abgashauptstranges (9) bildet und zusammen mit einem weiteren rohrförmigen Abschnitt (9a) des letzteren eine hinreichend lange Mischstrecke für die beiden aus den Abgasteilsträngen (3, 4) austretenden Gasströme bildet.

7. Abgasanlage nach Anspruch 1, **dadurch gekennzeichnet, dass** der rohrförmige Abschnitt (3a) des ersten Abgasteilstrangs (3) koaxial zum rohrförmigen Abschnitt (4a) des zweiten Abgasteilstrangs (4) angeordnet ist.

8. Abgasanlage nach Anspruch 1, **dadurch gekennzeichnet, dass** der rohrförmige Abschnitt (3a) des ersten Abgasteilstrangs (3) den gleichen Durchmesser wie die Gehäuse-Außenwand (11a) aufweist.

9. Abgasanlage nach Anspruch 5, **dadurch gekennzeichnet, dass** der rohrförmige Abschnitt (3a) des ersten Abgasteilstrangs (3) einen kleineren Durchmesser als die Gehäuse-Außenwand (11a) hat und dass der Einströmraum (12a) durch die Gehäuse-Außenwand (11a) sowie einen mit dieser und dem Abschnitt (3a) verbundenen Wandabschnitt (12b) begrenzt ist.

10. Abgasanlage nach Anspruch 7, **dadurch gekennzeichnet, dass** der rohrförmige Abschnitt (4a) des zweiten Abgasteilstrangs (4) einen Außendurchmesser hat, der ca. dem 0,3- bis 0,7-fachen des Durchmessers der zylindrischen Außenwand (11a) des Gehäuses (11) entspricht.

11. Abgasanlage nach Anspruch 1, **dadurch gekennzeichnet, dass** der rohrförmige Abschnitt (4a) des zweiten Abgasteilstrangs (4) durch ein gerades Rohr oder zwei miteinander verbundene Rohrstücke gebildet ist, wobei in das innenendige Rohrstück (4a') der Hydrolysekatalysator (8) eingebaut ist.

12. Abgasanlage nach Anspruch 11, **dadurch gekennzeichnet, dass** das Rohrstück (4a') gleichzeitig die Gehäuseaußenwand des Hydrolysekatalysators (8) und die Gehäuseinnenwand für den ringförmigen Oxidationskatalysator (7) bildet oder als Träger für letzteren dient.

13. Abgasanlage nach Anspruch 1, **dadurch gekennzeichnet, dass** der erste Abgasteilstrang (3) mit seinem Abschnitt (3') schräg oder senkrecht stehend zur Längsachse des rohrförmigen Abschnitts (3a) seitlich in diesen einmündet.

14. Abgasanlage nach Anspruch 1, **dadurch gekennzeichnet, dass** der zweite Abgasteilstrang (4) mit seinem Abschnitt (4') koaxial in den rohrförmigen Abschnitt (4a) einmündet.

15. Abgasanlage nach Anspruch 1, **dadurch gekennzeichnet, dass** dem Hydrolysekatalysator (8) im Fall einer Harnstoffwasserlösung als Reduktionsmittel ein in den rohrförmigen Abschnitt (4a) des zweiten Abgasteilstrangs (4) eingebauter Strömungsmischer (16) vorgeordnet ist.

16. Abgasanlage nach Anspruch 1, **dadurch gekennzeichnet, dass** dem Hydrolysekatalysator (8) zur Beschleunigung der Reduktionsmittelverdampfung ein in den rohrförmigen Abschnitt (4a) des zweiten Abgasteilstrangs (4) eingebauter Verdampfer bzw. eine Heizeinrichtung (17) vorgeordnet ist.

17. Abgasanlage nach einem der Ansprüche 1 bis 3, **dadurch gekennzeichnet, dass** das Gehäuse (11) zusätzlich als (Vor-)Schalldämpfer ausgebildet ist.

18. Abgasanlage nach Anspruch 1, **dadurch gekennzeichnet, dass** es sich bei dem bzw. den im Abgashauptstrang (9) angeordneten Katalysator(en) um einen oder mehrere SCR-Katalysator(en) (10) und gegebenenfalls Ammoniaksperrkatalysator(en) (10a), Partikeloxidationskatalysator(en) (10b) sowie Stickoxidsperrkatalysator(en) (10c) handelt.

19. Abgasanlage nach Anspruch 18, **dadurch gekennzeichnet, dass** zumindest der/die SCR-Katalysator(en) (10) in einen im Abgashauptstrang (9) angeordneten (Haupt-)Schalldämpfer (19) eingebaut sind.

## Claims

1. Exhaust-gas system of an internal-combustion engine, especially of a commercial vehicle, wherein the exhaust outlets (2) of some of the cylinders communicate with a first partial exhaust line (3) and the exhaust outlets (2) of the other cylinders with a second partial exhaust line (4), whereby a catalytic converter (7,8) is located in each partial exhaust line (3, 4) and both partial exhaust lines (3,4) end downstream of the catalytic converters (7, 8) in a common main exhaust line (9) in which at least one other catalytic converter (10, 10a, 10b, 10c) is located, **characterised in that** the catalytic converter (7) in the first exhaust line (3) is an oxidation catalytic converter that can convert the nitrogen monoxide (NO) in the exhaust gas passing through it into nitrogen dioxide (NO₂), that the catalytic converter (8) in the second partial exhaust line (4) is a hydrolysis catalytic converter, that the hydrolysis catalytic converter (8) is installed in a common housing (11) together with an annular oxidation catalytic converter (7) that surrounds it, that a tubular section (4a) of the second partial exhaust line (4) leads into the housing (11) and holds the hydrolysis catalytic converter (8) in its end section (4a*) at that location, that a tubular section (3a) of the first partial exhaust line (3) surrounds the tubular section (4a) of the second partial exhaust line (4) to form an annular inflow chamber (12) for the oxidation catalytic converter (7) and simultaneously serves as a heating chamber, and that a reduction agent can be sprayed by means of a nozzle (13) into the tubular section (4a) of the second partial exhaust line (4) upstream of the hydrolysis catalytic converter (8), and ammonia can be generated from the reduction agent by means of the hydrolysis catalytic converter (8).

2. Exhaust-gas system according to Claim 1, **characterised in that** the hydrolysis catalytic converter (8) is a circular cylinder and the oxidation catalytic converter (7) surrounding it is also an annular cylinder, that the two catalytic converters (7, 8) are coaxial to each other and that two different gas streams can flow through them simultaneously.

3. Exhaust-gas system according to Claim 1, **characterised in that** the oxidation catalytic converter (7) has its own outer wall with which it fits into the sleeve-shaped outer wall (11a) of the housing (11).

4. Exhaust-gas system according to Claim 1, **characterised in that** the sleeve-shaped outer wall (11a) of the housing (11) simultaneously forms the outer wall of the oxidation catalytic converter (7) held inside it.

5. Exhaust-gas system according to Claim 1, **characterised in that** in the housing (11), in the area before that annular inlet area (7a) of the oxidation catalytic converter (7), an annular inflow chamber (12a) is formed around the tubular section (4a) of the second partial exhaust line (4) that communicates with the inflow chamber (12).

6. Exhaust-gas system according to Claim 1, **characterised in that** in the housing (11), after the outflow cross-sections (7b, 8b) of the oxidation catalytic converter (7) and hydrolysis catalytic converter (8), there is a common outflow chamber (18) that forms part of the common main exhaust line (9) and, together with another tubular section (9a) of the latter, forms a sufficiently long mixing path for the two gas flows exiting the partial exhaust lines (3, 4).

7. Exhaust-gas system according to Claim 1, **characterised in that** the tubular section (3a) of the first partial exhaust line (3) is coaxial with the tubular section (4a) of the second partial exhaust line (4).

8. Exhaust-gas system according to Claim 1, **characterised in that** the tubular section (3a) of the first partial exhaust line (3) has the same diameter as the outer wall (11a) of the housing (11).

9. Exhaust-gas system according to Claim 5, **characterised in that** the tubular section (3a) of the first partial exhaust line (3) has a smaller diameter than the outer wall (11a) of the housing (11) and that the inflow chamber (12a) is bordered by the outer wall (11a) of the housing (11) and by a wall section (12b) connected to said outer wall (11a) and to the section (3a).

10. Exhaust-gas system according to Claim 7, **characterised in that** the tubular section (4a) of the second partial exhaust line (4) has an outer diameter that is approximately 0.3 to 0.7 times the diameter of the cylindrical outer wall (11a) of the housing (11).

11. Exhaust-gas system according to Claim 1, **characterised in that** the tubular section (4a) of the second partial exhaust line (4) is formed by a straight pipe or by two connected pipe sections, whereby the hydrolysis catalytic converter (8) is installed in the inner end pipe section (4a').

12. Exhaust-gas system according to Claim 11, **characterised in that** the pipe section (4a') simultaneously forms the outer wall of the housing of the hydrolysis catalytic converter (8) and the inner wall of the housing for the annular oxidation catalytic converter (7), or serves as the support for the latter.

13. Exhaust-gas system according to Claim 1, **characterised in that** the section (3') of the first partial exhaust line (3) ends in the side of the tubular section (3a) at an angle or perpendicular to the longitudinal axis of said tubular section (3a).

14. Exhaust-gas system according to Claim 1, **characterised in that** the section (4') of the second partial exhaust line (4) ends coaxially in the tubular section (4a).

15. Exhaust-gas system according to Claim 1, **characterised in that** ) if a urea solution is used as the reducing agent the hydrolysis catalytic converter (8) is located upstream of a flow mixer (16) installed in the tubular section (4a) of the second partial exhaust line (4.

16. Exhaust-gas system according to Claim 1, **characterised in that** to speed up evaporation of the reducing agent the hydrolysis catalytic converter (8) is located upstream of an evaporator or heating unit (17) installed in the tubular section (4a) of the second partial exhaust line (4).

17. Exhaust-gas system according to one of Claims 1 to 3, **characterised in that** the housing (11) is additionally designed as an (pre-) silencer.

18. Exhaust-gas system according to Claim 1, **characterised in that** the catalytic converter(s) in the main exhaust line (9) is/are one or a plurality of SCR catalytic converter(s) (10) and possibly an ammonia blocking catalytic converter(s) (10a), particle oxidation catalytic converter(s) (10b), and nitrogen oxide blocking catalytic converter(s) (10c).

19. Exhaust-gas system according to Claim 18, **characterised in that** at least the SCR catalytic converter(s) (10) is/are installed in a (main) silencer (19) in the main exhaust line (9).

## Revendications

1. Système d'échappement d'un moteur à combustion interne, en particulier d'un véhicule industriel, dans lequel les sorties d'échappement (1) d'une partie des cylindres communiquent avec une première ligne d'échappement partielle (3) et les sorties d'échappement (2) de l'autre partie des cylindres avec une deuxième ligne d'échappement partielle (4), auquel cas est disposé dans chaque ligne d'échappement partielle (3, 4) un catalyseur (7, 8) et les deux lignes d'échappement partielles (3, 4) débouchent, dans le sens d'écoulement en aval des catalyseurs (7, 8), dans une ligne d'échappement principale (9) commune dans laquelle est disposé au moins un autre catalyseur (10, 10a, 10b, 10c), **caractérisé en ce que** le catalyseur (7) disposé dans la première ligne d'échappement partielle (3) est un catalyseur à oxydation par lequel le monoxyde d'azote (NO) contenu dans le flux des gaz d'échappement peut être transformé en dioxyde d'azote (NO₂), **en ce que** le catalyseur (8) disposé dans la deuxième ligne d'échappement partielle (4) est un catalyseur à hydrolyse, **en ce que** le catalyseur à hydrolyse (8) est monté conjointement au catalyseur à oxydation (7) l'entourant dans un carter (11), **en ce que** la deuxième ligne d'échappement partielle (4) est guidé dans le carter (11) à l'aide d'une section tubulaire (4a) et reçoit le catalyseur à hydrolyse (8) dans une partie finale (4a') à cet endroit, **en ce que** la première ligne d'échappement partielle (3) enveloppe à une certaine distance la section tubulaire (4a) de la deuxième ligne d'échappement partielle (4) à l'aide d'une section tubulaire (3a), formant ainsi une zone d'amenée (12) annulaire, servant en même temps de chambre de chauffage pour le catalyseur à oxydation (7), et **en ce qu'**un agent de réduction peut être injecté au moyen d'un injecteur (13) dans la section tubulaire (4a) de la deuxième ligne d'échappement partielle (4) dans le sens de l'écoulement en amont du catalyseur à hydrolyse (8), cet agent de réduction permettant de produire de l'ammoniac au moyen du catalyseur à hydrolyse (8).

2. Système d'échappement selon la revendication 1, **caractérisé en ce que** le catalyseur à hydrolyse (8) est de forme cylindrique et le catalyseur à oxydation (7) l'entourant est de forme cylindrique, les deux catalyseurs étant donc disposés coaxialement l'un par rapport à l'autre et pouvant être traversés en parallèle par deux flux différents de gaz d'échappement.

3. Système d'échappement selon la revendication 1, **caractérisé en ce que** le catalyseur à oxydation (7) présente une paroi extérieure en propre avec laquelle il est ajusté à la paroi extérieure de carter en forme de collet (11a).

4. Système d'échappement selon la revendication 1, **caractérisé en ce que** la paroi extérieure de carter en forme de collet (11a) forme simultanément la paroi extérieure du catalyseur à oxydation (7) logé à l'intérieur.

5. Système d'échappement selon la revendication 1, **caractérisé en ce que**, dans le carter (11) au niveau de la zone en amont de la surface d'admission annulaire (7a) du catalyseur à oxydation (7), un compartiment d'admission (12a) annulaire est prolongé par la section tubulaire (4a) de la deuxième ligne d'échappement partielle (4) qui communique avec le compartiment d'amenée (12).

6. Système d'échappement selon la revendication 1, **caractérisé en ce que** se trouve dans le carter (11), à la suite des sections transversales de sortie (7b, 8b) du catalyseur à oxydation (7) et du catalyseur à hydrolyse (8), un compartiment de sortie (18) qui forme une partie de la ligne d'échappement principale commune (9) et forme, conjointement avec une autre section tubulaire (9a) de cette dernière, une conduite de mélange suffisamment longue pour les deux flux de gaz d'échappement sortant des lignes d'échappement partielles (3, 4).

7. Système d'échappement selon la revendication 1, **caractérisé en ce que** la section tubulaire (3a) de la première ligne d'échappement partielle (3) est disposée coaxialement par rapport à la section tubulaire (4a) de la deuxième ligne d'échappement partielle.

8. Système d'échappement selon la revendication 1, **caractérisé en ce que** la section tubulaire (3a) de la première ligne d'échappement partielle (3) présente le même diamètre que la paroi extérieure de carter (11a).

9. Système d'échappement selon la revendication 5, **caractérisé en ce que** la section tubulaire (3a) de la première ligne d'échappement partielle (3) possède un diamètre plus petit que la paroi extérieure de carter (11a) et **en ce que** le compartiment d'admission (12a) est délimité par la paroi extérieure de carter (11a) ainsi que par une section de paroi (12b) liée à celle-ci et à la section (3a).

10. Système selon revendication 7, **caractérisé en ce que** la section tubulaire (4a) de la deuxième ligne d'échappement partielle (4) possède un diamètre extérieur qui correspond au 0,3 à 0,7 du diamètre de la paroi extérieure cylindrique (11a) du carter (11).

11. Système d'échappement selon la revendication 1, **caractérisé en ce que** la section tubulaire (4a) de la deuxième ligne d'échappement partielle (4) est formée d'un tuyau droit ou de deux éléments tubulaires liés entre eux, auquel cas le catalyseur à hydrolyse (8) est monté dans l'élément tubulaire (4a') se trouvant à l'extrémité intérieure.

12. Système d'échappement selon la revendication 11, **caractérisé en ce que** l'élément tubulaire (4a') forme simultanément la paroi extérieure de carter du catalyseur à hydrolyse (8) et la paroi intérieure de carter du catalyseur à oxydation (7) annulaire ou sert de support à ce dernier.

13. Système d'échappement selon la revendication 1, **caractérisé en ce que** la première ligne d'échappement partielle (3) débouche, avec sa section (3') disposée de biais ou verticalement par rapport à l'axe longitudinal de la section tubulaire (3a), latéralement dans celle-ci.

14. Système d'échappement selon la revendication 1, **caractérisé en ce que** la deuxième ligne d'échappement partielle (4) débouche avec sa section (4') coaxialement dans la section tubulaire (4a).

15. Système d'échappement selon la revendication 1, **caractérisé en ce qu'**un mélangeur de flux (16) monté dans la section tubulaire (4a) de la deuxième ligne d'échappement partielle (4) est disposé en amont du catalyseur à hydrolyse en cas d'utilisation d'une solution d'eau et d'urée comme agent de réduction.

16. Système d'échappement selon la revendication 1, **caractérisé en ce qu'**un évaporateur ou un dispositif de chauffage (17) monté dans la section tubulaire (4a) de la deuxième ligne d'échappement partielle (4) est disposé en amont du catalyseur à hydrolyse pour accélérer l'évaporation de l'agent de réduction.

17. Système selon l'une des revendications 1 à 3, **caractérisé en ce que** le carter (11) est formé en supplément comme (pré-)silencieux d'échappement.

18. Système d'échappement selon la revendication 1, **caractérisé en ce que**, dans le cas du ou des catalyseur(s) disposé(s) dans la ligne d'échappement principale, il s'agit d'un ou de plusieurs catalyseurs SCR et, le cas échéant, de catalyseurs à rétention d'ammoniac (10a), de catalyseurs à oxydation de particules (10b) ainsi que de catalyseurs à rétention d'oxydes d'azote (10c).

19. Système d'échappement selon la revendication 18, **caractérisé en ce qu'**au moins le/les catalyseur(s) SCR est/sont monté(s) dans un silencieux d'échappement (principal) disposé dans la ligne d'échappement principale (9).
